# EUROPÄISCHE PATENTSCHRIFT

(11) **EP 3 236 100 B1**
(45) Veröffentlichungstag und Bekanntmachung des Hinweises auf die Patenterteilung: **01.04.2020**
(21) Anmeldenummer: 17164936.1
(22) Anmeldetag: 05.04.2017
(51) Int. Cl.: F16D 65/097, F16D 69/04, B61H 5/00

(54) **BREMSBELAGHALTER FÜR EIN SCHIENENFAHRZEUG**
BRAKE LINING HOLDER FOR A RAIL VEHICLE
SUPPORT DE GARNITURE DE FREIN POUR UN VÉHICULE SUR RAILS

(30) Priorität: 19.04.2016 AT 503492016
(43) Veröffentlichungstag der Anmeldung: 25.10.2017
(73) Patentinhaber: Siemens Mobility Austria GmbH, 1210 Wien (AT)
(72) Erfinder: Zenz, Rüdiger, 8020 Graz (AT); Schinagl, Gerhild, 8046 Stattegg (AT)
(74) Vertreter: Deffner, Rolf

(56) Entgegenhaltungen:
- JP-A- 2009 068 566
- JP-A- 2010 078 059
- JP-A- 2012 057 643

## Beschreibung

Die Erfindung betrifft einen Bremsbelaghalter für ein Schienenfahrzeug, mit zumindest einer Verriegelungsvorrichtung sowie einer in Richtung einer Bremsbelaghalterlängsachse verlaufenden Gleitschiene für die Aufnahme eines Bremsbelags.

Bremsbelaghalter für Schienenfahrzeuge müssen Bremsbeläge sicher verriegeln, d.h. vor unbeabsichtigten Bewegungen sowie Verlust schützen. Aus diesem Grund werden Verriegelungsvorrichtungen eingesetzt.
Diese müssen über einen langen Einsatzzeitraum neben einem entsprechenden Sicherheitsniveau einen raschen Tausch von Bremsbelägen ermöglichen und resistent gegenüber mechanischen und thermischen Belastungen bzw. Verschleiß sowie sonstigen Umwelteinflüssen sein.
Einzelne Komponenten müssen im Zuge der Wartung und Instandhaltung leicht und rasch getauscht werden können. Ferner soll eine Verriegelungsvorrichtung ein Spiel zwischen dem Bremsbelag und dem Bremsbelaghalter auch unter Wirkung von Wärmedehnungen etc. ausgleichen können.

Nach dem Stand der Technik beschreibt beispielsweise die EP 2 587 086 B1 eine Verriegelungsvorrichtung eines Bremsbelaghalters für ein Schienenfahrzeug. Der Bremsbelaghalter umfasst eine Gleitschiene mit einem Schwalbenschwanzabschnitt, in dem ein Bremsbelag arretiert werden kann.
Auf dem Bremsbelaghalter im Bereich der Gleitschiene oder auf einem Riegel sind vertikal ausgerichtete, elastische Mittel angeordnet, die eine vertikale Kraft auf den Bremsbelag ausüben, um diesen in der Gleitschiene zu blockieren.
Der Riegel wird in einem unteren Bereich des Bremsbelaghalters in eine quer zu einer Bremsbelaghalterlängsachse verlaufende Führungsschiene eingeführt und es erfolgt eine Verriegelung des Bremsbelags aufgrund einer vertikalen Kraft des Riegels auf den Bremsbelag. Der Riegel und die Führungsschiene sind z.B. keilförmig ausgeführt.
Der genannte Ansatz weist in seiner bekannten Form den Nachteil auf, dass für das Einbringen des Riegels in die Führungsschiene ein Werkzeug erforderlich ist.
Weiterhin werden die vertikal ausgerichteten, elastischen Mittel insbesondere durch die vertikalen Komponenten von Kontaktkräften zwischen dem Bremsbelag und einer Bremsscheibe stark belastet.
Ferner werden die elastischen Mittel durch ihre Anordnung in unmittelbarer Nähe zu dem Bremsbelag thermisch stark belastet.

Weiterhin ist die JP 2010 078059 A bekannt, in welcher eine Installationseinrichtung mit einem Verankerungsblock für Bremsbeläge von Fahrzeugbremsen beschrieben ist. Es ist eine Nockenwelle in Bohrungen des Verankerungsblocks und eines Bremsbelaghalters vorgesehen, welche zur Fixierung des Verankerungsblocks in einer Ausnehmung des Bremsbelaghalters verdreht wird. Aufgrund der Fixierung des Verankerungsblocks in dem Bremsbelaghalter und eines Kontakts zwischen dem Verankerungsblock und einem Bremsbelag ist der Bremsbelag in dem Bremsbelaghalter verriegelt.
Es ist nicht ersichtlich, dass die Nockenwelle in den Bohrungen geführt wird, d.h. dass die Nockenwelle auch nach der Fixierung des Verankerungsblocks eine gewisse Beweglichkeit für einen Spiel- und Distanzausgleich zwischen Bremsbelag und Bremsbelaghalter aufweist.

Der Erfindung liegt daher die Aufgabe zugrunde, einen gegenüber dem Stand der Technik verbesserten Bremsbelaghalter anzugeben.

Erfindungsgemäß wird diese Aufgabe gelöst mit einem Bremsbelaghalter der eingangs genannten Art,
bei dem die Verriegelungsvorrichtung eine Exzenterwelle mit einem auf einer ersten Stirnfläche angeordneten Exzenter, eine mit dem Bremsbelaghalter verbundene Buchse sowie eine Feder aufweist,
wobei die Exzenterwelle in einer Weise in der Buchse geführt wird und die Feder in einer Weise koaxial zu der Exzenterwelle angeordnet ist, dass der Exzenter Kräfte gegen den Bremsbelag und den Bremsbelaghalter ausübt.

Die Exzenterwelle ermöglicht aufgrund ihrer Beweglichkeit in Richtung einer Exzenterwellenlängsachse gegen die rückstellende Wirkung der Feder einen vorteilhaften Distanzausgleich zwischen dem Bremsbelag und dem Bremsbelaghalter. Dadurch wird das z.B. von unterschiedlichen Wärmeausdehnungen dieser beiden Komponenten beeinflusste Spiel zwischen dem Bremsbelag und dem Bremsbelaghalter reduziert. Folglich werden Verschleiß und Schäden an einem Reibungsbremssystem sowie störende Geräuschemissionen in günstiger Weise gemindert.
Weiterhin ist für ein Arretieren und Lösen der Verriegelungsvorrichtung kein Werkzeug erforderlich.

Eine vorteilhafte Ausgestaltung erhält man, wenn auf der Mantelfläche der Exzenterwelle eine Schraubenliniennut ausgebildet ist, und
wenn auf der inneren Mantelfläche der Buchse ein Schraubenlinienprofil als Gegenkontur zu der Schraubenliniennut vorgesehen ist.
Diese Maßnahme bewirkt aufgrund des Reibungskontakts zwischen der Schraubenliniennut und des Schraubenlinienprofils einen selbsthemmenden Effekt der Exzenterwelle in der Buchse. Der Bewegungsablauf im Zusammenhang mit dem Arretieren und Lösen der Verriegelungsvorrichtung ist dadurch kinematisch definiert und unbeabsichtigte Bewegungen der Exzenterwelle in Richtung der Exzenterwellenlängsachse werden erschwert.

Es ist günstig, wenn die Verriegelungsvorrichtung einen verschleißarmen Kulissenstein umfasst und dass für dessen Aufnahme eine Kulissenführung vorgesehen ist,
wenn der Kulissenstein eine Auflagefläche aufweist, an welcher in einem arretierten Zustand der
Verriegelungsvorrichtung der Bremsbelag anliegt,
wenn der Kulissenstein eine Anlegefläche aufweist, an welcher in einem arretierten Zustand der Verriegelungsvorrichtung der Exzenter anliegt, und
wenn der Kulissenstein eine Vertiefung aufweist, in welche in einem arretierten Zustand der Verriegelungsvorrichtung der Exzenter einrastet.
Durch diese Maßnahme werden Probleme aufgrund von mechanischen und thermischen Belastungen sowie Verschleiß der Verriegelungsvorrichtung reduziert. Der Kulissenstein ist als die im Vergleich zu dem Exzenter und der Exzenterwelle stärker mechanisch und thermisch belastete Komponente aus einem verschleißarmen Werkstoff ausgeführt und kann aufgrund seiner Ausführung und seiner Anordnung auf dem Bremsbelaghalter ohne großen Aufwand, schnell und kostengünstig ausgetauscht werden. Die Häufigkeit eines vollständigen Tausches der Verriegelungsvorrichtung wird gemindert.

Eine vorteilhafte Lösung erhält man,
wenn der Bremsbelag in die Gleitschiene eingeschoben wird, wenn der Kulissenstein mit Seitenflächen parallel zu auf dem Bremsbelaghalter angeordneten Führungsflächen und mit einer Grundfläche parallel zu einer auf dem Bremsbelaghalter angeordneten Kontaktfläche in den Bremsbelaghalter eingeführt wird,
wenn die Exzenterwelle in die Buchse eingeführt wird, und wenn die Exzenterwelle so lange um eine Exzenterwellenlängsachse verdreht wird, bis der Exzenter an der Anlegefläche anliegt und in die Vertiefung einrastet. Durch diese Maßnahme wird der Bremsbelaghalter in der Gleitschiene verriegelt. Das beschriebene Verfahren zeichnet sich durch Einfachheit und Robustheit aus, es ist für dessen Durchführung kein Werkzeug erforderlich. Ein Tausch von Bremsbelägen kann rasch vollzogen werden. Durch die Führung der Exzenterwelle in der Buchse und des Exzenters in dem Kulissenstein wird weiterhin ein Kapselungseffekt der genannten Komponenten gegenüber der Umwelt sowie folglich eine hohe Resistenz gegen Verunreinigungen erzielt.
Eine hohe Sicherheit gegen das Versagen der Verriegelung und gegen Bremsbelagverlust wird über die kombinierte Wirkung der Rückstellkraft der Feder, der vertikalen Kontaktkraft zwischen dem Kulissenstein und dem Bremsbelag, von Reibungskräften in den Kontakten zwischen den einzelnen Komponenten der Verriegelungsvorrichtung sowie des Formschlusses zwischen dem Exzenter und der Vertiefung bewirkt.
Ferner ist die Feder aufgrund ihrer Anordnung auf der dem Bremsbelag abgewandten Seite des Bremsbelaghalters gut vor thermischen Belastungen aufgrund eines Bremsvorgangs geschützt.
Kontaktkräfte zwischen dem Bremsbelag und einer Bremsscheibe werden über den Kulissenstein, den Exzenter und die Exzenterwelle insbesondere auf die Buchse übertragen, die Belastung der Feder aufgrund der genannten Kontaktkräfte ist gering.

Nachfolgend wird die Erfindung anhand von Ausführungsbeispielen näher erläutert.

Es zeigen beispielhaft:
- Fig. 1:: Einen Schrägriss einer ersten, beispielhaften Ausführung eines erfindungsgemäßen Bremsbelaghalters, wobei dessen Vorderseite und eine Verriegelungsvorrichtung in Explosionsdarstellung gezeigt werden,
- Fig. 2:: Einen Schrägriss der ersten, beispielhaften Ausführung eines erfindungsgemäßen Bremsbelaghalters, wobei dessen Rückseite und eine Verriegelungsvorrichtung in Explosionsdarstellung gezeigt werden,
- Fig. 3:: Eine Detailansicht der ersten, beispielhaften Ausführung eines erfindungsgemäßen Bremsbelaghalters, wobei ein Ausschnitt einer Exzenterwelle, eine Feder in Schnittdarstellung sowie ein Ausschnitt einer Buchse gezeigt werden,
- Fig. 4:: Ein Aufriss eines Kulissensteins wie er in der ersten, beispielhaften Ausführungsvariante eingesetzt wird, und
- Fig. 5:: Einen Schrägriss einer zweiten, beispielhaften Ausführung eines erfindungsgemäßen Bremsbelaghalters, wobei dessen Rückseite und eine Verriegelungsvorrichtung in Explosionsdarstellung gezeigt werden.

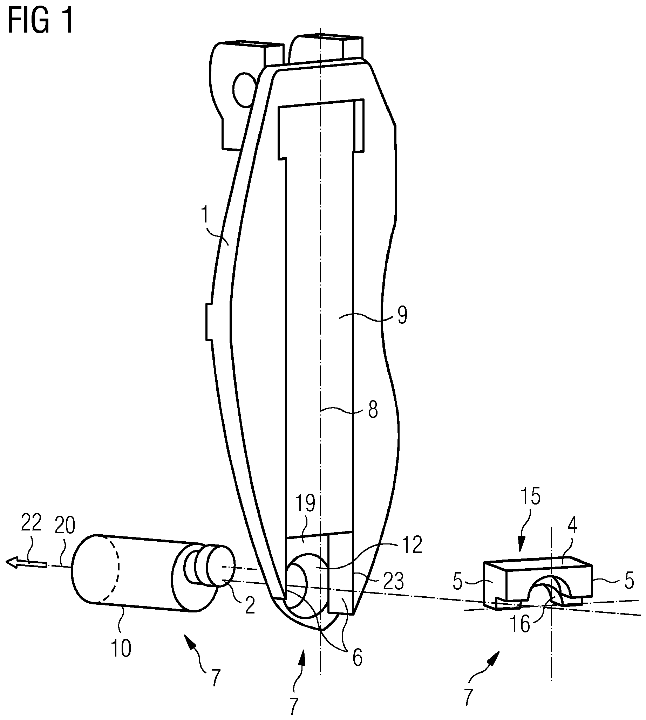

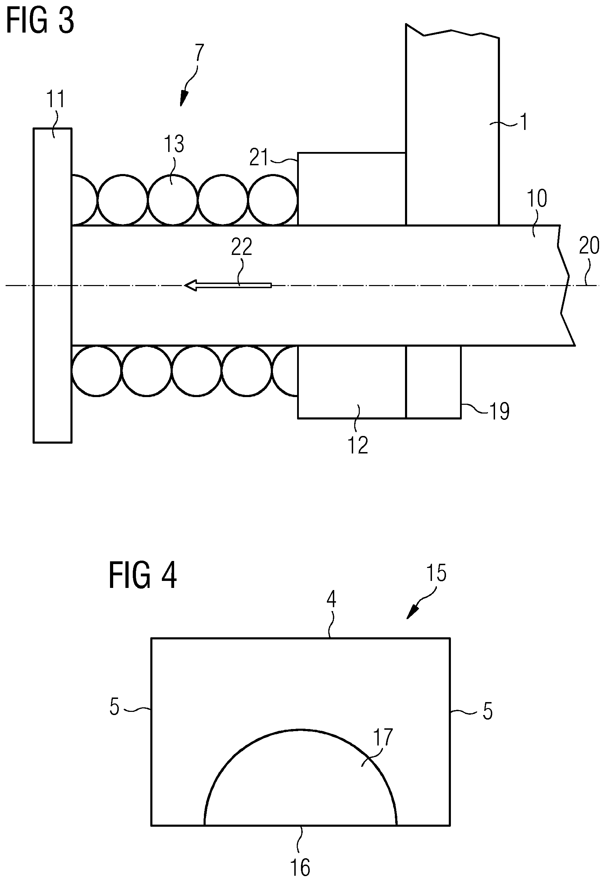

Ein in Fig. 1 gezeigter Schrägriss der Vorderseite einer ersten, beispielhaften Ausführung eines erfindungsgemäßen Bremsbelaghalters 1 umfasst eine in Richtung einer Bremsbelaghalterlängsachse 8 verlaufende, als Schwalbenschwanzführung ausgeführte Gleitschiene 9, eine Kulissenführung 23 mit zwei parallel zueinander angeordneten Führungsflächen 6 und einer Kontaktfläche 19 sowie eine Buchse 12.
Die Kulissenführung 23 ist im unteren Bereich des Bremsbelaghalters 1, unterhalb der Gleitschiene 9 angeordnet. Die Führungsflächen 6 verlaufen quer zu der Gleitschiene 9, die Kontaktfläche 19 ist parallel zu dieser ausgerichtet. Die Buchse 12 ist ebenfalls unterhalb der Gleitschiene 9 angeordnet, ihre Längsachse verläuft quer zu der Bremsbelaghalterlängsachse 8.
Die Buchse 12 ist Teil einer Verriegelungsvorrichtung 7. Diese umfasst weiterhin eine Exzenterwelle 10 mit einem zylindrischen Exzenter 2 sowie einen Kulissenstein 15. Diese Komponenten werden in Explosionsdarstellung gezeigt.
Die Exzenterwelle 10 weist auf einer ersten Stirnfläche den Exzenter 2, auf einer zweiten Stirnfläche einen in Fig. 1 nicht, jedoch in Fig. 3 dargestellten Flansch 11 auf. Dieser umfasst unmittelbar angrenzend an die erste Stirnfläche der Exzenterwelle 10 einen ersten zylindrischen Teil und unmittelbar angrenzend an die Stirnfläche des ersten zylindrischen Teils einen zweiten zylindrischen Teil mit größerem Durchmesser als der erste zylindrische Teil. Der Mittelpunkt des zweiten zylindrischen Teils liegt auf der Projektion des Stirnflächenumfangs des ersten zylindrischen Teils. Der erste zylindrische Teil und der zweite zylindrische Teil ragen nicht über die Projektion des Stirnflächenumfangs der Exzenterwelle 10 hinaus.

Auf der Seite des Flansches 11 ist, mit diesem verbunden und um die Exzenterwelle 10 sowie koaxial zu dieser verlaufend, eine in Fig. 1 nicht, jedoch in Fig. 3 dargestellte Feder 13 angeordnet. Diese bewirkt eine in Richtung der Exzenterwellenlängsachse 20 verlaufende Federkraft 22.

Der Kulissenstein 15 weist eine Anlegefläche 16 für das Anlegen des Exzenters 2 sowie, parallel zu seiner Grundfläche 18, eine halbzylindrische Vertiefung 17 für das Einrasten des Exzenters 2 auf. Die innere Mantelfäche der Vertiefung 17 ist deckungsgleich mit der Mantelfäche des Exzenters 2.
Die Vertiefung 17 ist nicht in Fig. 1, jedoch in Fig. 4 dargestellt.
Weiterhin ist auf dem Kulissenstein 15 eine Auflagefläche 4 für einen Bremsbelag vorgesehen.
Der Kulissenstein 15 ist aus einem hochfesten, verschleißresistenten Stahl ausgeführt.

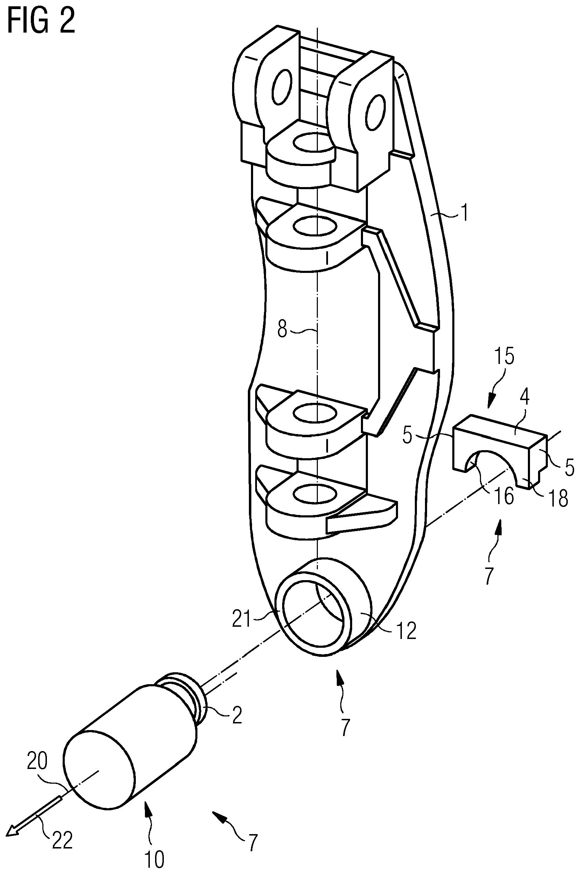

Für die Verriegelung eines in Fig. 1 nicht gezeigten Bremsbelags auf dem Bremsbelaghalter 1 wird der Bremsbelag mit einem auf seiner Rückseite angeordneten Schwalbenschwanzprofil in die Gleitschiene 9 eingeführt. Der Kulissenstein 15 wird mit Seitenflächen 5 parallel zu den auf dem Bremsbelaghalter 1 angeordneten Führungsflächen 6 und mit einer Grundfläche 18 parallel zu der auf dem Bremsbelaghalter 1 angeordneten Kontaktfläche 19 und an diese angrenzend in die Kulissenführung 23 des Bremsbelaghalters 1 eingeführt. Die Auflagefläche 4 weist in Richtung der Oberseite des Bremsbelaghalters 1, die Anlegefläche 16 in Richtung der Unterseite, d.h. ist der Buchse 12 zugewandt.
Die Exzenterwelle 10 wird in die Buchse 12 eingeführt, wobei die Exzenterwellenlängsachse 20 koaxial zu der Längsachse der Buchse 12 verläuft. Die Mantelfäche der Exzenterwelle 10 ist deckungsgleich mit der inneren Mantelfläche der Buchse 12.
Im Zuge der Bewegung legt sich die Feder 13 an eine entsprechend ausgeführte, in Fig. 2 gezeigte Buchsenstirnfläche 21 an und es baut sich die Federkraft 22 auf.
Sobald der erste zylindrische Teil des Exzenters 2 mit der Anlegefläche 16 des Kulissensteins 15 ausgerichtet ist, wird die Exzenterwelle 10 um die Exzenterwellenlängsachse 20 solange verdreht, bis der erste zylindrische Teil an der Anlegefläche 16 anliegt und der zweite zylindrische Teil in die Vertiefung 17 auf dem Kulissenstein einrastet.
In diesem Zustand ist die Exzenterwelle 10 über den Exzenter 2 in dem Kulissenstein 15 verriegelt. Eine vertikale Klemmkraft wirkt von dem Exzenter 2 her über die Auflagefläche 4 des Kulissensteins 15 auf den Bremsbelag und arretiert diesen in der Gleitschiene 9. Die Federkraft 22 wirkt rückstellend in Richtung der Exzenterwellenlängsachse 20 und presst den Exzenter 2 in die Vertiefung 17 sowie die Grundfläche 18 des Kulissensteins 15 an die Kontaktfläche 19 auf dem Bremsbelaghalter 1.

Fig. 2 zeigt einen Schrägriss der Rückseite einer ersten, beispielhaften Ausführung eines erfindungsgemäßen Bremsbelaghalters 1.
Es wird eine Buchsenstirnfläche 21 dargestellt. Im Übrigen entspricht der Inhalt von Fig. 2 jenem von Fig. 1.

Fig. 3 zeigt eine Detailansicht einer ersten, beispielhaften Ausführung eines erfindungsgemäßen Bremsbelaghalters 1 mit einer erfindungsgemäßen Verriegelungsvorrichtung 7, wobei ein Ausschnitt einer Exzenterwelle 10 mit einem Flansch 11, eine Feder 13 in Schnittdarstellung sowie ein Ausschnitt einer Buchse 12 gezeigt werden.
Die Feder 13 ist als zylindrische Schraubendruckfeder ausgeführt, es sind erfindungsgemäß jedoch auch andere Varianten vorstellbar, wie z.B. Tellerfedern, Plattfedern oder Torsionsfedern in entsprechender Anordnung in Bezug auf die Exzenterwelle 10.
Die Feder 13 ist mit dem Flansch 11 verbunden, um die Exzenterwelle 10 angeordnet und verläuft koaxial zu dieser. Es ist ein Montagezustand dargestellt, bei dem die Feder 13 an einer Buchsenstirnfläche 21 anliegt, dadurch komprimiert wird und eine Federkraft 22 erzeugt.

Bei der in Fig. 3 gezeigten Anordnung der Feder 13 handelt es sich um eine vorteilhafte Lösung. Es sind erfindungsgemäß jedoch verschiedene Anordnungen und Orientierungen der Feder 13 bzw. der Federkraft 22 vorstellbar.

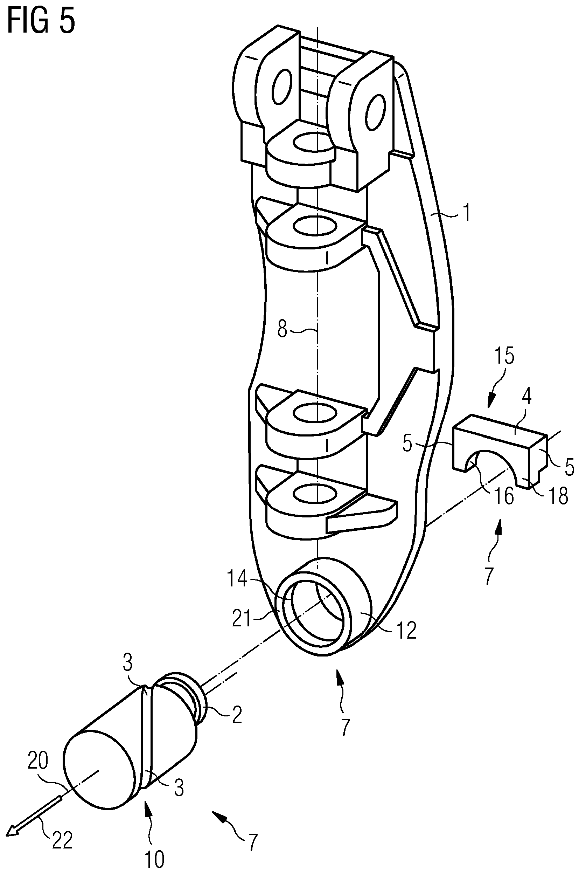

Fig. 4 zeigt einen erfindungsgemäßen Kulissenstein 15, wie er für die in Zusammenhang mit den Fig. 1 und Fig. 2 beschriebene, erste Ausführungsvariante eines erfindungsgemäßen Bremsbelaghalters 1 eingesetzt wird.
Der Kulissenstein 15 wird als Aufriss mit projizierenden Seitenflächen 5 gezeigt. Er umfasst auf seiner Unterseite eine projizierend dargestellte Anlegefläche 16 für einen in den Fig. 1 und Fig. 2 gezeigten Exzenter 2 und auf seiner Oberseite eine projizierend gezeigte Auflagefläche 4 für einen Bremsbelag.
Ferner ist auf dem Kulissenstein 15 eine halbzylindrische Vertiefung 17 vorgesehen, deren innere Mantelfläche deckungsgleich mit der Mantelfläche des Exzenters 2 ist.
Der Exzenter 2 kann in die Vertiefung 17 eingeführt werden und verriegelt so, wie in Zusammenhang mit Fig. 1 beschrieben, den Kulissenstein 15 auf dem Bremsbelaghalter 1. Für eine in Fig. 5 gezeigte, zweite Ausführungsvariante eines erfindungsgemäßen Bremsbelaghalters 1 ist, abweichend zu Fig. 4, auf dem Kulissenstein 15 keine Vertiefung 17 vorgesehen.

Fig. 5 stellt einen Schrägriss der Rückseite einer zweiten, beispielhaften Ausführung eines erfindungsgemäßen Bremsbelaghalters 1 dar.
Im Unterschied zu Fig. 2 weist eine Exzenterwelle 10 eine Schraubenliniennut 3 und eine Buchse 12 ein Schraubenlinienprofil 14 auf. Die Schraubenliniennut 3 ist auf der Mantelfläche der Exzenterwelle 10 ausgebildet, das Schraubenlinienprofil 14 auf der inneren Mantelfläche der Buchse 12.
Ein Kulissenstein 15 weist nicht die in Fig. 4 dargestellte Vertiefung 17 auf.

Im Unterschied zu dem in Zusammenhang mit Fig. 1 beschriebenen Verfahren für die Verriegelung eines Bremsbelags auf dem Bremsbelaghalter 1 wird die Exzenterwelle 10 über einen aufgrund der Schraubenliniennut 3 und des Schraubenlinienprofils 14 kinematisch definierten Bewegungsablauf in die Buchse 12 eingeschraubt.
Das Verfahren endet für diese zweite, beispielhafte Ausführungsvariante mit dem Anlegen eines Exzenters 2 in eine Anlegefläche 16. Die Exzenterwelle 10 wird aufgrund des kombinierten Form- und Kraftschlusses der Passung zwischen der Schraubenliniennut 3 und dem Schraubenlinienprofil 14 sowie aufgrund einer Federkraft 22 an einer Bewegung und einer Freigabe des Kulissensteins 15 und des Bremsbelags gehindert.
Im Übrigen entspricht das dargestellte Prinzip jener Ausführungsvariante, die in Fig. 1 bis Fig. 4 gezeigt wird.

### Liste der Bezeichnungen

- 1: Bremsbelaghalter
- 2: Exzenter
- 3: Schraubenliniennut
- 4: Auflagefläche
- 5: Seitenflächen
- 6: Führungsflächen
- 7: Verriegelungsvorrichtung
- 8: Bremsbelaghalterlängsachse
- 9: Gleitschiene
- 10: Exzenterwelle
- 11: Flansch
- 12: Buchse
- 13: Feder
- 14: Schraubenlinienprofil
- 15: Kulissenstein
- 16: Anlegefläche
- 17: Vertiefung
- 18: Grundfläche
- 19: Kontaktfläche
- 20: Exzenterwellenlängsachse
- 21: Buchsenstirnfläche
- 22: Federkraft
- 23: Kulissenführung

## Patentansprüche

1. Bremsbelaghalter (1) für ein Schienenfahrzeug, mit zumindest einer Verriegelungsvorrichtung (7) sowie einer in Richtung einer Bremsbelaghalterlängsachse verlaufenden Gleitschiene (9) für die Aufnahme eines Bremsbelags, wobei die Verriegelungsvorrichtung (7) eine Exzenterwelle (10) mit einem auf einer ersten Stirnfläche angeordneten Exzenter (2), eine mit dem Bremsbelaghalter (1) verbundene Buchse (12) sowie eine Feder (13) aufweist, **dadurch gekennzeichnet, dass** die Exzenterwelle (10) in einer Weise in der Buchse (12) geführt wird und die Feder (13) in einer Weise koaxial zu der Exzenterwelle (10) angeordnet ist, dass der Exzenter (2) Kräfte gegen den Bremsbelag und den Bremsbelaghalter (1) ausübt.

2. Bremsbelaghalter nach Anspruch 1, **dadurch gekennzeichnet,**
**dass** auf der Mantelfläche der Exzenterwelle (10) eine Schraubenliniennut (3) ausgebildet ist, und
**dass** auf der inneren Mantelfläche der Buchse (12) ein Schraubenlinienprofil (14) als Gegenkontur zu der Schraubenliniennut (3) vorgesehen ist.

3. Bremsbelaghalter nach Anspruch 1 **dadurch gekennzeichnet,**
**dass** die Verriegelungsvorrichtung (7) einen verschleißarmen Kulissenstein (15) umfasst und dass für dessen Aufnahme eine Kulissenführung (23) vorgesehen ist,
**dass** der Kulissenstein (15) eine Auflagefläche (4) aufweist, an welcher in einem arretierten Zustand der Verriegelungsvorrichtung (7) der Bremsbelag anliegt, dass der Kulissenstein (15) eine Anlegefläche (16) aufweist, an welcher in einem arretierten Zustand der Verriegelungsvorrichtung (7) der Exzenter (2) anliegt, und dass der Kulissenstein (15) eine Vertiefung (17) aufweist, in welche in einem arretierten Zustand der Verriegelungsvorrichtung (7) der Exzenter (2) einrastet.

4. Bremsbelaghalter nach Anspruch 2, **dadurch gekennzeichnet,**
**dass** die Verriegelungsvorrichtung (7) einen verschleißarmen Kulissenstein (15) umfasst und dass für dessen Aufnahme eine Kulissenführung (23) vorgesehen ist,
**dass** der Kulissenstein (15) eine Auflagefläche (4) aufweist, an welcher in einem arretierten Zustand der Verriegelungsvorrichtung (7) der Bremsbelag anliegt, und dass der Kulissenstein (15) eine Anlegefläche (16) aufweist, an welcher in einem arretierten Zustand der Verriegelungsvorrichtung (7) der Exzenter (2) anliegt.

5. Verfahren für die Arretierung eines Bremsbelags auf einem Bremsbelaghalter nach Anspruch 3, **dadurch gekennzeichnet,**
**dass** der Bremsbelag in die Gleitschiene (9) eingeschoben wird,
**dass** der Kulissenstein (15) mit Seitenflächen (5) parallel zu auf dem Bremsbelaghalter (1) angeordneten Führungsflächen (6) und mit einer Grundfläche (18) parallel zu einer auf dem Bremsbelaghalter (1) angeordneten Kontaktfläche (19) in den Bremsbelaghalter (1) eingeführt wird,
**dass** die Exzenterwelle (10) in die Buchse (12) eingeführt wird, und
**dass** die Exzenterwelle (10) so lange um eine Exzenterwellenlängsachse (20) verdreht wird, bis der Exzenter (2) an der Anlegefläche (16) anliegt und in die Vertiefung (17) einrastet.

6. Verfahren für die Arretierung eines Bremsbelags auf einem Bremsbelaghalter nach Anspruch 4, **dadurch gekennzeichnet,**
**dass** der Bremsbelag in die Gleitschiene (9) eingeschoben wird,
**dass** der Kulissenstein (15) mit Seitenflächen (5) parallel zu auf dem Bremsbelaghalter (1) angeordneten Führungsflächen (6) und mit einer Grundfläche (18) parallel zu einer auf dem Bremsbelaghalter (1) angeordneten Kontaktfläche (19) in den Bremsbelaghalter (1) eingeführt wird,
**dass** die Exzenterwelle (10) in die Buchse (12) eingeführt wird, und
**dass** die Exzenterwelle (10) so lange um eine Exzenterwellenlängsachse (20) verdreht wird, bis der Exzenter (2) an der Anlegefläche (16) anliegt.

## Claims

1. Brake lining holder (1) for a rail vehicle, with at least one latching apparatus (7) and a sliding rail (9) running in the direction of a brake lining holder longitudinal axis for receiving a brake lining, wherein the latching apparatus (7) has an eccentric shaft (10) with an eccentric (2) arranged on a first end face, a bushing (12) connected to the brake lining holder (1) and a spring (13),
**characterised in that**
the eccentric shaft (10) is guided in the bushing (12) in a manner and the spring (13) is arranged coaxially with the eccentric shaft (10) in a manner that the eccentric (2) exerts forces on the brake lining and the brake lining container (1).

2. Brake lining holder according to claim 1, **characterised in that** a helical groove (3) is embodied on the peripheral surface of the eccentric shaft (10), and that a helical profile (14) is provided on the inner peripheral surface of the bushing (12) as a mating contour for the helical groove (3) .

3. Brake lining holder according to claim 1, **characterised in that** the latching apparatus (7) comprises a low-wear sliding block (15) and that a sliding guide (23) is provided for receiving said sliding block (15),
that the sliding block (15) has a supporting surface (4), against which the brake lining rests in a locked state of the latching apparatus (7),
that the sliding block (15) has an abutment surface (16), against which the eccentric (2) rests in a locked state of the latching apparatus (7), and
that the sliding block (15) has a depression (17), into which the eccentric (2) engages in a locked state of the latching apparatus (7).

4. Brake lining holder according to claim 2, **characterised in that** the latching apparatus (7) comprises a low-wear sliding block (15) and that a sliding guide (23) is provided for receiving said sliding block (15),
that the sliding block (15) has a supporting surface (4), against which the brake lining rests in a locked state of the latching apparatus (7), and
that the sliding block (15) has an abutment surface (16), against which the eccentric (2) rests in a locked state of the latching apparatus (7).

5. Method for locking a brake lining on a brake lining holder according to claim 3, **characterised in that** the brake lining is inserted into the sliding rail (9),
that the sliding block (15) is introduced into the brake lining holder (1) with side surfaces (5) parallel to guide surfaces (6) arranged on the brake lining holder (1) and with a base surface (18) parallel to a contact surface (19) arranged on the brake lining holder (1),
that the eccentric shaft (10) is introduced into the bushing (12), and
that the eccentric shaft (10) is turned about an eccentric shaft longitudinal axis (20) until the eccentric (2) rests against the abutment surface (16) and engages into the depression (17).

6. Method for locking a brake lining on a brake lining holder according to claim 4, **characterised in that** the brake lining is inserted into the sliding rail (9),
that the sliding block (15) is introduced into the brake lining holder (1) with side surfaces (5) parallel to guide surfaces (6) arranged on the brake lining holder (1) and with a base surface (18) parallel to a contact surface (19) arranged on the brake lining holder (1),
that the eccentric shaft (10) is introduced into the bushing (12), and
that the eccentric shaft (10) is turned about an eccentric shaft longitudinal axis (20) until the eccentric (2) rests against the abutment surface (16).

## Revendications

1. Support de garniture de frein (1) pour un véhicule sur rail, comprenant au moins un dispositif de verrouillage (7) ainsi qu'une glissière (9) s'étendant en direction d'un axe longitudinal du support de garniture de frein, pour loger une garniture de frein, dans lequel le dispositif de verrouillage (7) présente un arbre excentrique (10) comportant un excentrique (2) disposé sur une première face avant, un connecteur femelle (12) relié au support de garniture de frein (1) ainsi qu'un ressort (13),
**caractérisé en ce que** l'arbre excentrique (10) est inséré dans le connecteur femelle (12) et le ressort (13) est disposé coaxialement à l'arbre excentrique (10) de telle manière que l'excentrique (2) exerce des forces contre la garniture de frein et le support de garniture de frein (1).

2. Support de garniture de frein selon la revendication 1, **caractérisé en ce qu'**un écrou à hélice (3) est formé sur la surface circonférentielle de l'arbre excentrique (10), et
**en ce qu'**un profil d'hélice (14) est prévu en tant que contre-profil de l'écrou à hélice (3) sur la surface circonférentielle intérieure du connecteur femelle (12).

3. Support de garniture de frein selon la revendication 1, **caractérisé en ce que** le dispositif de verrouillage (7) comprend un coulisseau (15) à faible taux d'usure et **en ce qu'**un guide de coulisse (23) est prévu pour le loger,
**en ce que** le coulisseau (15) présente une surface d'appui (4) sur laquelle la garniture de frein repose lorsque le dispositif de verrouillage (7) est en position verrouillée,
**en ce que** le coulisseau (15) présente une surface d'application (16) sur laquelle l'excentrique (2) repose lorsque le dispositif de verrouillage (7) est en position verrouillée, et
**en ce que** le coulisseau (15) présente une cavité (17) dans laquelle l'excentrique (2) s'encliquète lorsque le dispositif de verrouillage (7) est en position verrouillée.

4. Support de garniture de frein selon la revendication 2, **caractérisé en ce que** le dispositif de verrouillage (7) comprend un coulisseau à taux d'usure faible (15) et **en ce qu'**un guide de coulisse (23) est prévu pour le loger,
**en ce que** le coulisseau (15) présente une surface d'appui (4) sur laquelle la garniture de frein repose lorsque le dispositif de verrouillage (7) est en position verrouillée, et
**en ce que** le coulisseau (15) présente une surface d'application (16) sur laquelle l'excentrique (2) repose lorsque le dispositif de verrouillage (7) est en position verrouillée.

5. Procédé pour le verrouillage d'une garniture de frein sur un support de garniture de frein selon la revendication 3, **caractérisé en ce que** la garniture de frein est insérée dans la glissière (9),
**en ce que** le coulisseau (15) est introduit dans le support de garniture de frein (1) en ayant les surfaces latérales (5) parallèles à des surfaces de guidage (6) disposées sur le support de garniture de frein (1) et en ayant une surface de base (18) parallèle à une surface de contact (19) disposée sur le support de garniture de frein (1),
**en ce que** l'arbre excentrique (10) est introduit dans le connecteur femelle (12), et
**en ce que** l'arbre excentrique (10) est tourné autour d'un axe longitudinal d'arbre excentrique (20) jusqu'à ce que l'excentrique (2) repose sur la surface d'application (16) et qu'il s'encliquète dans la cavité (17).

6. Procédé pour le verrouillage d'une garniture de frein sur un support de garniture de frein selon la revendication 4, **caractérisé en ce que** la garniture de frein est insérée dans la glissière (9),
**en ce que** le coulisseau (15) est introduit dans le support de garniture de frein (1) en ayant les surfaces latérales (5) parallèles à des surfaces de guidage (6) disposées sur le support de garniture de frein (1) et en ayant une surface de base (18) parallèle à une surface de contact (19) disposée sur le support de garniture de frein (1),
**en ce que** l'arbre excentrique (10) est introduit dans le connecteur femelle (12), et
**en ce que** l'arbre excentrique (10) est tourné autour d'un axe longitudinal d'arbre excentrique (20) jusqu'à ce que l'excentrique (2) repose sur la surface d'application (16).
